(19) Europäisches Patentamt
European Patent Office
Office européen des brevets

(11) Veröffentlichungsnummer: **0 214 256 B1**

# (12) EUROPÄISCHE PATENTSCHRIFT

(45) Veröffentlichungstag der Patentschrift: **31.05.89**

(51) Int. Cl.⁴: **G 11 B 27/10**, G 11 B 7/08, G 11 B 19/24, G 11 B 23/24, G 11 B 21/08

(21) Anmeldenummer: **86901855.6**

(22) Anmeldetag: **08.03.86**

(86) Internationale Anmeldenummer: **PCT/EP 86/00127**

(87) Internationale Veröffentlichungsnummer: **WO 86/05310 (12.09.86 Gazette 86/20)**

## (54) SYSTEM ZUR ERMITTLUNG DER ABTASTGESCHWINDIGKEIT VON AUDIOPLATTEN MIT BERÜHRUNGSLOSER ABTASTUNG.

(30) Priorität: **09.03.85 DE 3508423**

(43) Veröffentlichungstag der Anmeldung: **18.03.87 Patentblatt 87/12**

(45) Bekanntmachung des Hinweises auf die Patenterteilung: **31.05.89 Patentblatt 89/22**

(84) Benannte Vertragsstaaten: **AT BE CH DE FR GB IT LI LU NL SE**

(56) Entgegenhaltungen:
**EP-A-0 064 897**
**EP-A-0 123 946**
**EP-A-0 130 495**
**FR-A-2 344 917**

**Patents Abstracts of Japan, Band 8, Nr. 92 (P-271(1529), 27. April 1984 & JP A 595472**
**Patents Abstracts of Japan, Band 3, Nr. 90 (E-127), 31. Juli 1979 & JP A 5468603**
**Patents Abstracts of Japan, Band 8, Nr. 237 (P-130)(1674), 30. Oktober 1984 & JP A 59113576**
**Computer Design, Band 22, Nr. 1, Januar 1983, Winchester, Massachusetts, (US). A.E. Bell: "Optical data storage technology status and prospects", Seiten 133-146**
**Patents Abstracts of Japan, Band 7, Nr. 180 (P-215)(1325), 9. August 1983 & JP A 5883366**
**Patents Abstracts of Japan, Band 8, Nr. 92 (P-**

(73) Patentinhaber: **Deutsche Thomson- Brandt GmbH, Hermann- Schwer- Strasse 3 Postfach 1307, D-7730 Villingen- Schwenningen (DE)**

(72) Erfinder: **BAAS, Dieter, Sofienstrasse 10, D-7640 Kehl (DE)**

(56) Entgegenhaltungen: (Fortsetzung)
**271)(1529), 27. April, 1984 & JP A 595462**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



LIBER, STOCKHOLM 1989

**Beschreibung**

Die Erfindung betrifft eine Anordnung zur Ermittlung der Abtastgeschwindigkeit von Audioplatten, indem die Umdrehungszahl der Audioplatte an einer definierten Plattenstel le ermittelt wird, indem die Audioplatte mittels eines Lichtstrahls abgetastet wird, der mittels eines Fokusregelkreises auf die Audioplatte fokussiert und mittels eines Spurregelkreises auf den Datenspuren der Audioplatte geführt wird.

Eine derartige Anordnung ist z. B. für einen CD-Spieler geeignet, bei dem die Audioplatte, eine sogenannte CD-Platte, mit konstanter Bahngeschwindigkeit abgespielt wird. In der englischen Sprache wird eine solche Anordnung als Constant Linear Velocity System bezeichnet. Im Gegensatz dazu ist bei einem analogen Plattenspieler, bei dem es sich um ein Constant Angular System handelt, die Winkelgeschwindigkeit konstant.

Eine CD-Platte darf der Norm entsprechend mit einer Geschwindigkeit zwischen 1,2 m/s und 1,4 m/s vom Hersteller aufgenommen werden. Die Abtastgeschwindigkeit beim Abspielen einer CD-Platte in einem CD-Spieler muß aber mit ihrer Aufnahmegeschwindigkeit übereinstimmen. Wurde die CD-Platte mit einer Geschwindigkeit von z. B. 1,2 m/s aufgenommen, so muß sie auch mit derselben Geschwindigkeit von 1,2 m/s abgespielt werden. Weil aber die Aufnahmegeschwindigkeit zwischen 1,2 m/s und 1,4 m/s liegen darf, hat jede CD-Platte ihre eigene plattenspezifische Abtastgeschwindigkeit, z. B. 1,2 m/s oder 1,3 m/s oder 1,4 m/s.

Wenn z. B. ein Musikstück von einer Stunde Dauer auf eine CD-Platte aufgenommen wird, ist die Pitlänge bei einer größeren Aufnahmegeschwindigkeit größer als bei einer kleineren Aufnahmegeschwindigkeit. Deshalb ist die Spurlänge und damit auch die Anzahl der Datenspuren größer, wenn das Musikstück mit einer Geschwindigkeit von z. B. 1,4 m/s aufgenommen wurde als mit einer Geschwindigkeit von z. B. 1,2 m/s.

Die Abtastgeschwindigkeit wird bei einem CD-Spieler aus dem HF-Signal abgeleitet, das ein Lichtstrahl von der CD-Platte abtastet. In einem Decoder werden aus dem HF-Signal das Tonsignal und ein Synchronsignal gewonnen, das den Plattenantrieb genau auf die richtige Drehzahl regelt. Deshalb wird bei einem CD-Spieler jede CD-Platte mit der plattenspezifischen Abtastgeschwindigkeit gedreht. Die Bitrate der ausgelesenen Bits wird konstant gehalten. Jedoch ist nicht bekannt, wie groß die plattenspezifische Abtastgeschwindigkeit tatsächlich ist.

Um aber beim Spurspringen zum Auffinden einer gewünschten Plattenstelle, z. B. eines gewünschten Musikstücks, die Anzahl der zu überspringenden Spuren genau berechnen zu können, genügt es nicht zu wissen, daß die Abtastgeschwindigkeit zwischen 1,2 m/s und 1,4 m/s liegt. Je genauer die plattenspezifische Abtastgeschwindigkeit bekannt ist, desto genauer läßt sich die Anzahl der Spuren berechnen. Andernfalls ist von einem Mittelwert der Abtastgeschwindigkeit auszugehen.

Aus der JP-OS-595 472 ist eine Wiedergabevorrichtung für Platten bekannt, bei der aus einem Periodensignal das Regelsignal für die Regelung der Drehzahl des Plattenantriebs gewonnen wird. Das Periodensignal wird aus dem Wiedergabesignal der Platte demoduliert. Um beim Spurspringen die neue Position des Abtasters möglichst genau bestimmen zu können, wird an einer definierten Plattenstelle die Abtastgeschwindigkeit ermittelt und anschließend gespeichert.

In der JP-OS-5 468 603, in der JP-OS-5 883 366 und in der EP-A-0 064 897 sind Widergabegeräte für Platten beschrieben, bei denen die Exzentrizität einer Platte zur Bestimmung der Plattendrehzahl ausgenutzt wird.

Hat eine Platte nur eine sehr geringe oder gar keine Exzentrizität, so muß die Plattendrehzahl nach einem anderen Verfahren ermittelt werden.

Der Erfindung liegt daher die Aufgabe zugrunde, die plattenspezifische Abtastgeschwindigkeit selbst dann mit geringem Aufwand zu ermitteln, wenn die Platte keine Exzentrizität aufweist.

Die Erfindung löst diese Aufgabe dadurch, daß die Umdrehungszahl der Audioplatte aus der gefiltern Frequenz eines Fokusfehlerrsignals gewonnen wird.

Ist die plattenspezifische Abtastgeschwindigkeit ermittelt, so kann eine exakte Spurzahl zwischen dem Start- und dem Zielpunkt ermittelt werden. Dadurch ist es möglich, bei jeder beliebigen CD-Platte die Zielpunkte mit einer Sprungausführung ohne Korrekturmaßnahmen zu erreichen. Dies führt zu wesentlich kürzeren Zugriffszeiten.

Es zeigen
Figur 1 ein erstes Ausführungsbeispiel
Figur 2 ein zweites Ausführungsbeispiel der Erfindung.

Figur 1 zeigt ein Blockschaltbild zur Ermittlung der Abtastgeschwindigkeit. Von einem Servo- und Pick-up-System 1 werden einerseits die ausgelesenen Daten einem Decoder 6, der das NF-Signal erzeugt, als auch die vom Servo und Pick-up-System 1 eingestellten Daten, wie der aktuelle Durchmesser di, der sich durch die aktuelle Position des Abtasters auf der CD-Platte ergibt, und die Umdrehungsdauer ti, gegebenenfalls mit Hilfe eines separaten Sensors 3, einer Auswerteschaltung 2 zur Bestimmung der plattenspezifischen Abtastgeschwindigkeit zugeführt. Das Ergebnis der Auswerteschaltung 2 wird in einem Speicher 4 festgehalten und bei Berechnung z. B. der Sprungkoordinaten von der Sprungsteuerschaltung 5 abgerufen. Dieser Sprungsteuerschaltung 5 werden vom Decoder 6 ausserdem die im Datenstrom enthaltenen

aktuellen Adressdaten zugeführt. Der Ausgang der Sprungsteuerschaltung 5 ist mit dem Steuereingang des Servo- und Pick-up-Systems 1 verbunden. Weiterhin besteht die Möglichkeit, die Adressdaten der Auswerteschaltung 2 zuzuführen. Sind Adressdaten vorhanden, die in einem definierten Zusammenhang zum Plattendurchmesser di stehen, wie z. B. der Startpunkt des ersten Stückes, so ist die Position durch die Adressdaten bestimmt. Bei einer CD-Platte beträgt der Durchmesser für den Startpunkt des ersten Stückes 50 mm. In diesem Fall kann die Information des aktuellen Durchmessers di vom Servo- und Pick-up-System 1 entfallen.

Durch das Servo- und Pick-up-System 1 wird ein Fokusfehlersignal UR erzeugt, das zur Nachsteuerung des Stellgliedes des Fokusregelkreises verwendet wird. Dieses Fokusfehlersignal UR wird zur Ermittlung der Plattenumdrehung benutzt. Aus dem tiefpaßgefilterten Fokusfehlersignal wird für die Ermittlung der Abtastgeschwindigkeit Vo die Frequenz des Fokusfehlersignals ermittelt. Durch die mathematische Beziehung

$$Vo = \pi \cdot di \cdot fi = \pi \cdot di \cdot 1/ti$$

ist mit der Frequenz fi des Fokusfehlersignals bzw. des Sensorsignals ti eine Bestimmung der Abtastgeschwindigkeit leicht durchzuführen. Die Drehzahl der CD-Platte beträgt im Bereich des inneren Durchmessers do ca. 8 Umdrehungen in der Sekunde.

Figur 2 zeigt eine Schaltung zur Messung einer Plattenumdrehung ohne zusätzlichen Decoder. Das Fokusfehlersignal UR wird sowohl dem Stellglied 7 des Fokusregelkreises als auch über einen Tiefpaß 8, 9 einem Komparator 10 zugeführt. Der Ausgang des Komparators 10 führt auf einen Eingang eines Zählers 12. Ein weiterer Eingang des Zählers 12 ist mit einem Taktgenerator 13 verbunden. Die Ausgänge des Zählers 12 sind über ein Latch 14 mit einer Kontrolleinheit 15 verbunden, die aus dem Zählergebnis des Zählers 12 die Abtastgeschwindigkeit Vo berechnet. Ein Ausgang der Kontrolleinheit 15 ist mit je einem Eingang des Zählers 12 und des Latches 14 verbunden und dient als Startund Meßfreigabesignal.

Wenn die CD-Platte keine radiale Exzentrizität aufweist, kann die Umdrehungszahl der Platte nicht aus dem radialen Fehlersignal gewonnen werden, das dem Stellglied des Spurregelkreises zugeführt wird. Dagegen kann sie aber aus dem Fokusfehlersignal abgeleitet werden, weil unabhängig vom Vorhandensein einer radialen Exzentrizität die Spiegelfläche der CD-Platte, auf welche der Lichtstrahl fokussiert wird, nicht vollkommen eben, sondern wellig ist. Wegen der Welligkeit der CD-Platte treten im Fokusfehlersignal UR beim Abtasten einer bestimmten Datenspur, z .B. einer bestimmten Windung mit einem vorgegebenen Radius der spiralförmigen Datenspuren, stets die gleichen Frequenzen auf. Aus dem tiefpaßgefilterten Fokusfehlersignal UR läßt sich die Drehzahl der CD-Platte ableiten.

**Patentansprüche**

1. Anordnung zur Ermittlung der Abtastgeschwindigkeit von Audioplatten, indem die Umdrehungszahl der Audioplatte an einer definierten Plattenstelle ermittelt wird, indem die Audioplatte mittels eines Lichtstrahls abgetastet wird, der mittels eines Fokusregelkreises auf die Audioplatte fokussiert und mittels eines Spurregelkreises auf den Datenspuren der Audioplatte geführt wird, dadurch gekennzeichnet, daß die Umdrehungszahl der Audioplatte aus der gefilterten Frequenz eines Fokusfehlersignals gewonnen wird.

2. System nach Anspruch 1, dadurch gekennzeichnet, daß die definierte Plattenstelle der Beginn des ersten Musikstücks ist.

3. Anordnung nach Anspruch 1 oder 2, dadurch gekennzeichnet, daß von einem Servo- und Pick-up-System (1) das abgetastete Datensignal dem Eingang eines Decoders (6), der aktuelle Durchmesser di, der die jeweilige Position des Abtasters des Servo- und Pick-up-Systems (1) kennzeichnet, dem ersten Eingang einer Auswerteschaltung (2) und das Fokusfehlersignal (UR) dem Eingang eines Sensors (3) zugeführt wird, daß der Ausgang des Sensors (3) mit dem zweiten Eingang der Auswerteschaltung (2) verbunden ist, deren Ausgang mit dem Eingang eines Speichers (4) verbunden ist, daß der Ausgang des Speichers (4) mit dem ersten Eingang einer Sprung-Steuer-Schaltung (5) verbunden ist, deren zweitem Eingang vom Decoder (6) Adressdaten zugeführt werden, und daß der Ausgang der Sprungsteuer-Schaltung (5) mit dem Eingang des Servo- und Pick-up-Systems (1) verbunden ist.

4. System nach Anspruch 1 oder 2, dadurch gekennzeichnet, daß von einem Servo- und Pick-up-System (1) das abgetastete Datensignal dem Eingang eines Decoders (6) und das Fokusfehlersignal (UR) dem Eingang eines Sensors (3) zugeführt wird, daß dem ersten Eingang einer Auswerteschaltung (2) Adressdaten vom Decoder (6) zugeführt werden, daß der Ausgang des Sensors (3) mit dem zweiten Eingang der Auswerteschaltung (2) verbunden ist, deren Ausgang mit dem Eingang eines Speichers (4) verbunden ist, daß der Ausgang des Speichers (4) mit dem ersten Eingang einer Sprung-Steuer-Schaltung (5) verbunden ist, deren zweitem Eingang von Decoder (6) Adressdaten zugeführt werden, und daß der Ausgang der Sprung-Steuer-Schaltung (5) mit dem Eingang des Servo- und Pick-up-Systems (1) verbunden ist.

5. System nach Anspruch 1 oder 2, dadurch gekennzeichnet, daß das Fokusfehlersignal (UR)

dem Stellglied (7) des Fokusregelkreises und über einen Tiefpaß (8, 9) dem ersten Eingang eines Komparators (10) zugeführt wird, an dessen zweitem Eingang eine Referenzgröße liegt, daß der Ausgang des Komparators (10) mit dem Zähleingang eines Zählers (12) verbunden ist, dessen Takteingang mit dem Ausgang eines Taktgenerators (13) verbunden ist, daß die Ausgänge des Zählers (12) mit den Eingängen eines Latches (14) verbunden sind, dessen Ausgänge mit den Eingängen einer Kontrolleinheit (15) verbunden sind, die aus dem Zählergebnis des Zählers (12) die plattenspezifische Abtastgeschwindigkeit berechnet und daß ein Ausgang der Kontrolleinheit (15) mit dem Enable-Eingang des Zählers (12) und des Latches (14) verbunden ist.

**Claims**

1. Arrangement for ascertaining the scanning speed of audio discs, by ascertaining the speed of revolution of the audio disc at a defined point of the disc, by scanning the audio disc by means of a light beam which is focused onto the audio disc by means of a focus control circuit and is guided along the data-carrying tracks of the audio disc by means of a tracking control circuit, characterised in, that the speed of rotation of the audio disc is derived from filtered frequency of a focus error signal

2. Arrangement according to claim 1, characterised in that the defined point of the disc is the beginning of the first piece of music.

3. Arrangement according to claim 1 or 2, characterised in that the scanned data signal is fed from a servo and pick-up system (1) into the input of a decoder (6); the instantaneous diameter di, which characterises the instantaneous position of the scanner of the servo- and pick-up system (1), is fed into the first input of an evaluation circuit (2), and the focus error signal (UR) is fed into the input of a sensor (3); that the output of the sensor (3) is connected to the second input of a memory (4), that the output of the memory (4) is connected to the first input of a skip control circuit (5), into whose second input address data are fed, and that the output of the skip control circuit (5) is connected to the input of the servo- and pick-up system (1).

4. Arrangement according to claim 1 or 2, characterised in that the scanned data signal is fed from the servo- and pick-up system (1) into the input of a decoder (6) and the focus error signal is fed into the input of a sensor (3), that address data are fed from the decoder (6) into the first input of an evaluation circuit (2), that the output of the sensor (3) is connected to the second input of the evaluation circuit (2) whose output is connected to the input of a memory (4), that the output of the memory (4) is connected to the first input of a skip control circuit (5) into whose second input address data are fed from the decoder (6), and that the output of the skip control circuit (5) is connected to the input of the servo- and pick-up system (1).

5. Arrangement according to claim 1 or 2, characterised in that the focus error signal (UR) is fed into the servo component (7) of the focus control circuit and via a low-pass filter (8, 9) to the first input of a comparator at whose second input is a reference value, that the output of the comparator (10) is connected to the count input of a counter (12), whose pulse input is connected to the output of a pulse generator (13), that the outputs of the counter (12) are connected to the inputs of a latch (14), whose outputs are connected to the inputs of a control unit (15), which calculates the disc-specific scanning speed from the result of the count undertaken by the counter (12), and that one output of the control unit (15) is connected to the enable-input of the counter (12) and of the latch (14).

**Revendications**

1. Dispositif pour déterminer la vitesse d'exploration de disques audio, dans lequel la vitesse de rotation du disque est déterminée on un emplacement défini de ce dernier par le fait que le disque audio est exploré à l'aide d'un faisceau laser, qui est focalisé sur le disque au moyen d'un circuit de réglage du foyer, et est guidé sur les pistes de données du disque au moyen d'un circuit de réglage de piste, caractérisé par le fait que la vitesse de rotation du disque audio est obtenue à partir de la fréquence filtrée d'un signal d'écart du foyer.

2. Dispositif suivant la revendication 1, caractérisé par le fait que l'emplacement défini du disque est le début d'un premier morceau de musique.

3. Dispositif suivant la revendication 1 ou 2, caractérisé par le fait qu'un système d'asservissement et de détection (1) envoie le signal de données exploré à l'entrée d'un décodeur (6), le diamètre réel di qui caractérise le position respective du dispositif d'exploration du système d'asservissement et de détection (1), à la première entrée d'un circuit d'exploitation (2) et le signal (UR) d'écart du foyer à l'entrée d'un capteur (3), que la sortie du capteur (3) est reliée à le seconde entrée du circuit d'exploitation (2), dont la sortie est reliée à l'entrée d'une mémoire (4), que la sortie de la mémoire (4) est raccordée à la première entrée d'un circuit de commande de saut (5), à la seconde entrée duquel des données d'adresses sont envoyées par le décodeur (6), et que la sortie du circuit de commande de saut (5) est reliée à l'entrée du système d'asservissement et de détection (1).

4. Dispositif suivant la revendication 1 ou 2, caractérisé par le fait que le système d'asservissement et de détection (1) envoie le signal de données exploré à l'entrée d'un décodeur (6) et le signal (UR) d'écart du foyer à

l'entrée d'un capteur (3), que des données d'entrée sont envoyées par 10 décodeur (6) à la première entrée d'un circuit d'exploitation (72), que la sortie du capteur (3) est reliée à la seconde entrée du circuit d'exploitation (2), dont le sortie est reliée à une entrée d'une mémoire (4), que la sortie de la mémoire (4) est reliée à la première entrée d'un circuit de commande de saut (5), à la seconde entrée duquel des données d'adresses sont envoyées par le décodeur (6), et que la sortie du circuit de commande de saut (5) est reliée à l'entrée du système d'asservissement et de détection (1).

5. Dispositif suivant la revendication 1 ou 2, caractérisé par le fait que le signal (UR) de l'écart du foyer est envoyé à l'organe de réglage (7) du circuit de réglage du foyer et, par l'intermédiaire d'un filtre passe-bas (8, 9), à la première entrée d'un comparateur (10), à la seconde entrée duquel est appliquée une grandeur de référence, que la sortie du comparateur (10) est reliée à l'entrée de comptage d'un compteur (12), dont l'entrée de cadence est raccordée à la sortie d'un générateur de cadence (13), que les sorties du compteur (12) sont reliées aux entrées d'une bascule bistable (14), dont les sorties sont reliées aux entrées d'une unité de contrôle (15), qui calcule, à partir du résultat de comptage du compteur (12), la vitesse d'exploration spécifique pour le disque, qu'une sortie de l'unité de contrôle (15) est reliée à l'entrée de validation du compteur (12) et de la bascule bistable (14).

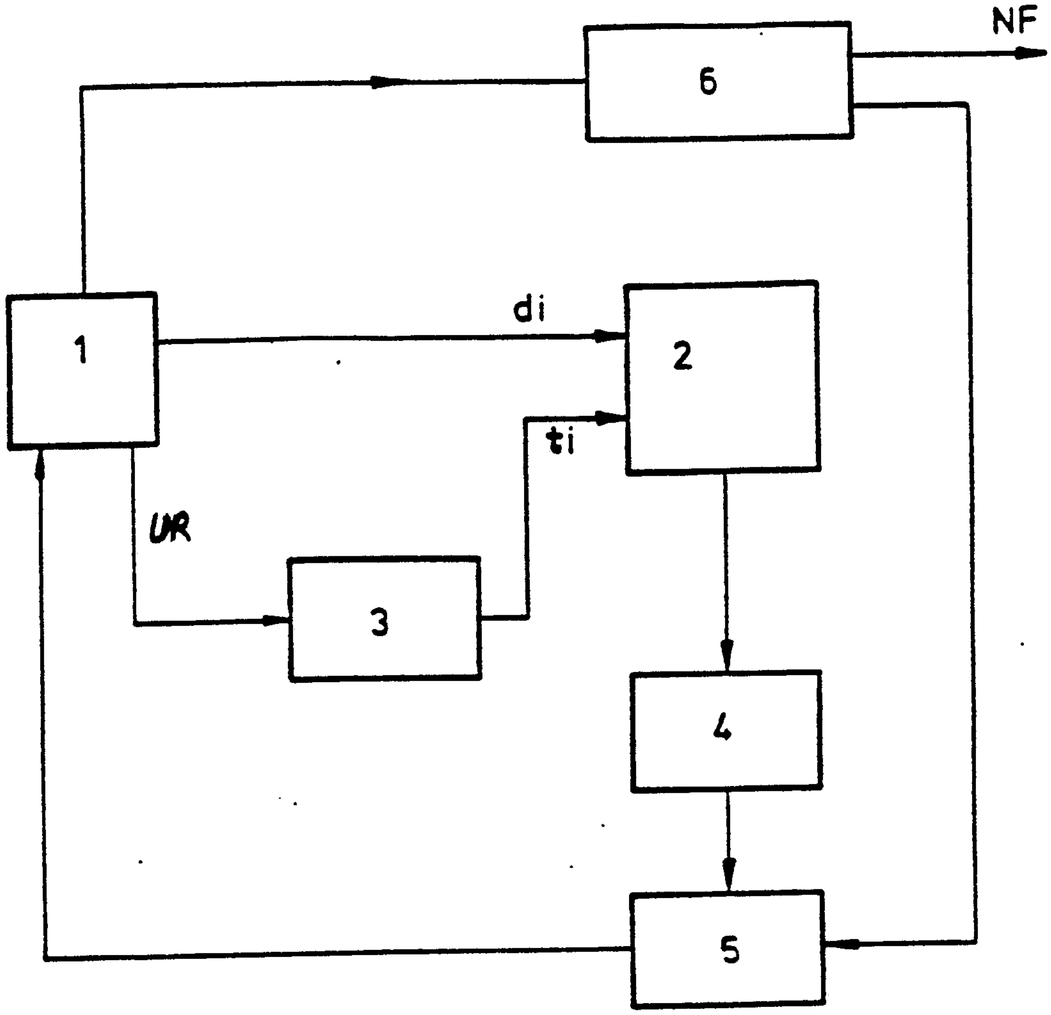


Fig. 1

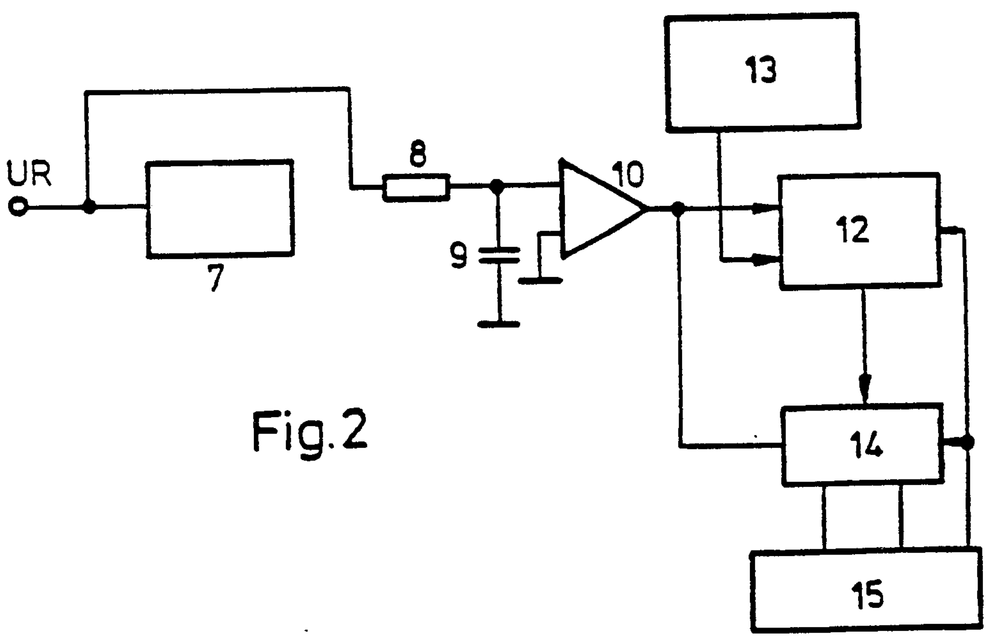


Fig. 2